# EUROPEAN PATENT APPLICATION

(11) **EP 3 618 486 A1**
(43) Date of publication of application: **04.03.2020**
(21) Application number: 18191586.9
(22) Date of filing: 30.08.2018
(51) Int. Cl.: H04W 24/02, H04L 12/24

(54) **EFFECTIVENESS RATING OF ACTION BASED ON USER'S EXPERIENCE AND EXCECUTED ACTIONS**

(71) Applicant: Nokia Solutions and Networks Oy, 02610 Espoo (FI)
(72) Inventor: Ligata, Amir, 2018 Antwerpen (BE)
(74) Representative: IP HILLS NV

(57) **Abstract**

Example embodiments describe an apparatus (300) comprising means for performing deriving (301) for a respective action from diagnostic data comprising executed actions (101) and user's experiences (200), wherein an action changes a state of a communication network, an effectiveness rating based on the user's experiences.

## Description

### Technical Field

Various example embodiments relate to executing recommended actions to improve a state of a communication network.

### Background

Communication networks, such as home networks, are becoming increasingly challenging to manage due to growing demands in terms of services, diversified end user devices, multiple coexisting technologies and segmented network topologies.

Whereas network managers focus on improving end user experiences, a plurality of problems emerge that have a negative and direct impact on the quality of end user experiences, making a timely and effective reaction of the network managers primordial.

Therefore, network managers diagnose the network, identify a problem, propose therefrom a dedicated action workflow comprising specific actions to be undertaken, and subsequently execute the actions to remedy the identified problem.

### Summary

The action workflow is owned by a customer care and include recommendations, such as automated ones like rebooting an access point, enabling or disabling a radio or service set identifier, SSID, triggering a band steering algorithm, and/or triggering a channel selection algorithm or interactive ones like adding a repeater, and/or replacing a router or access point, whereby it is the aim of customer care that the recommendations lead to a problem resolution or suppression.

Amongst others, it is an object of embodiments of the present disclosure to provide a solution that improves the selection of recommendations, also indicated as actions, to resolute or suppress a problem in a communication network.

This object is achieved, according to a first example aspect of the present disclosure, by an apparatus comprising means for performing:
- deriving for a respective action from diagnostic data comprising executed actions and user's experiences, wherein an action changes a state of a communication network, an effectiveness rating based on the user's experiences.

When an action or recommendation is proposed by customer care and subsequently automatically or manually executed, the executed actions together with user's experiences are stored as diagnostic data. User's experiences may, for example, be based on feedback from a user surveyed by customer care, or by assessing a behaviour of the communication network after the executing of one or more actions. User's experiences may also be based on the absence of a user's complain after the executing of an action or based on assessing subsequent executed actions after an initial one. The diagnostic data thus comprises executed actions and user's experiences which may be collected through a variety of ways.

From the diagnostic data, an effectiveness rating is derived for the executed actions stored therein. In other words, the effectiveness in terms of a resolution and/or suppression of a problem through the execution of an action is determined and expressed as an effectiveness rating.

Since the user's experiences are collected through a variety of ways, an accurate indication of the effectiveness of an executed action is obtained by the effectiveness rating. For example, when an action is executed, silent agitation may arise which will be stored as a user's experience when the user continuous using a poor-working network, thus when the action is non-effective. A user may also decide to make no further use of the network, which will be identified through a user's inactivity.

An executed action may also resolve or suppress a problem in an unexpected manner, for example when it resolves or suppresses a problem to which it was not initially related to. Alike, a problem may be resolved or suppressed by a sequence of taken actions, from which only a limited number are effective. Thus, through the deriving of an effectiveness rating for the executed actions, there is an overview on how effective the actions are after their executions.

Furthermore, a more accurate insight is obtained on how an action resolves or supresses a problem. When an effectiveness is solely based on feedback from a user, this may be biased and inaccurate, since a user experiencing poor functioning of a communication network tends to give more easily bad feedback, while another user who is satisfied after the execution of an action may not give feedback at all. Thus, by deriving the effectiveness rating from the diagnostic data, these two distinct scenarios are captured.

According to example embodiments, the diagnostic data further comprises key performance indicators, KPIs, wherein an action is triggerable by one or more KPIs; and wherein the means are further configured to perform:
- correlating the KPIs to the actions thereby obtaining a set of correlated KPIs for the action.

For the communication network, KPIs may be defined, wherein a KPI is indicative for a condition of the network. The KPIs may be defined taking into account the type of network, such as, for example, a Wi-Fi network, a powerline network, or an ethernet network, or may be defined for multiple types of communication networks. Since a KPI is indicative for a condition of a network, it may trigger an action when, for example, a predefined threshold of the KPI is exceeded through measuring parameters.

Since different actions may be triggered by a same KPI, and reversibly one KPI may trigger a variety of actions, it is an advantage that the KPIs are correlated to the actions, such that an accurate overview is obtained which KPI is correlated to which action. Thus, for the actions in the diagnostic data a set of correlated KPIs is obtained.

According to example embodiments, the means are further configured to perform:
- modelling a pattern of the set of correlated KPIs into an effective and a non-effective KPIs pattern based on the effectiveness rating.

Thus, by firstly deriving effectiveness ratings for the actions, and secondly a set of correlated KPIs for an action, a pattern of the set of correlated KPIs of an action may be modelled into an effective pattern and a non-effective pattern based on the effectiveness rating of the action. This way, for the actions stored in the diagnostic data KPIs are identified which lead to an effective action or recommendation and thus useful for further processing, while KPIs related to non-effective KPIs patterns may be further redefined, tuned or omitted. This way, the overall quality of the diagnostic data may further be improved.

Thus, a pattern is modelled and learned from the diagnostic data on the effectiveness of actions whereby the KPIs reflect specific conditions of the communication network. The output of modelling the diagnostic data, thus by deriving effectiveness ratings and correlated KPIs and modelling into effective and non-effective patterns, may then come in different levels of granularity. For example, in a binary manner reflecting the effectiveness of an action through the rating, and a soft value that quantifies potential improvement through the KPIs. It thus proactively gives an assessment on whether and to what extent a problem was solved by an executed action. Secondly, it relies on previous user's experiences yielding genuine impact.

According to example embodiments, the means are further configured to perform:
- selecting for a proposed action an effectiveness rating and a set of correlated KPIs based on the executed actions; and
- executing the proposed action when the effectiveness rating of the set exceeds a predefined threshold respectively the effective KPIs pattern results to an effective action

Prior to the executing of a proposed action, an effectiveness rating and a set of correlated KPIs in the diagnostic data is selected by linking the proposed action with the stored executed actions. For the proposed action it can thus prior to an execution be assessed if the proposed action will be effective or not. Advantageously, when a proposed action would be inefficient, it is avoided to execute such a time- and cost-wise inefficient approach. If such an inefficient action would be executed, costs associated with it are irreversibly list with no guarantee that it will yield any results.

Furthermore, by assessing a proposed action, there is an insight into whether and to what extent a related problem will be resolved or supressed. The proposed action will thus only be executed when it yields a significant improvement, wherein the expected improvement is based on objective diagnostic data.

The assessment and the prediction of the effectiveness of an action may be performed in an automated manner. For the effectiveness rating a threshold may be defined, and likewise for the effective KPIs pattern as well. For example, an action may be performed when at the KPI pattern results in an effective recommendation and/or when the effectiveness rating exceeds a threshold.

According to example embodiments, the means are further configured to perform:
- updating the diagnostic data when the proposed action is executed.

In other words, the diagnostic data remains updated by updating it when a proposed action is assessed as effective and subsequently executed. This way, it may also be verified if the assessment was indeed accurate.

According to example embodiments, the modelling is performed by a machine learning method.

The modelling of a pattern the set of correlated KPIs into effective and non-effective KPIs pattern may be performed by a machine learning method. Advantageously, when the diagnostic data comprises a vast amount of data, the data may be examined in a fast and efficient way. Furthermore, other diagnostic data related to another communication network may be exchanged, thereby enhancing the overall quality of the diagnostic data.

According to example embodiments, the machine learning method is a support vector machine.

Support vector machine is a binary linear classifier such that the KPIs may be classified in two classes in a vector space. This way, a clear distinction between the effective and non-effective KPIs patterns is obtained.

According to example embodiments, the machine learning method is a logistic regression algorithm.

A logistic regression algorithm allows to correlate two possible dependent outcomes to one or more variables, wherein the two outcomes are the effective KPIs pattern respectively the non-effective KPI pattern.

According to example embodiments, the communication network is one of the group of a wireless network, a power line network, and an ethernet network.

In other words, the apparatus may be deployed in a variety of communication networks.

According to a second aspect, a method is disclosed comprising the step of:
- deriving from diagnostic data comprising executed actions and user's experiences, wherein an action changes a state of a communication network, for a respective action an effectiveness rating based on the user's experiences.

According to a third aspect, a computer program product is disclosed comprising computer-executable instructions for performing the following step when the program is run on a computer:
- deriving from diagnostic data comprising executed actions and user's experiences, wherein an action changes a state of a communication network, for a respective action an effectiveness rating based on the user's experiences.

According to a fourth aspect, a computer readable storage medium is disclosed comprising commuter-executable instructions for performing the following step when the program is run on a computer:
- deriving from diagnostic data comprising executed actions and user's experiences, wherein an action changes a state of a communication network, for a respective action an effectiveness rating based on the user's experiences

### Brief Description of the Drawings

Some example embodiments will now be described with reference to the accompanying drawings.
Fig. 1 shows an example embodiment of a sequence of steps to assess a proposed action;
Fig. 2 shows another example embodiment of a sequence of steps to classify actions based on key performance indicators;
Fig. 3 shows an apparatus comprising means configured to analyse diagnostic data; and
Fig. 4 shows an example embodiment of a suitable computing system 400 for performing one or several steps in embodiments of the invention.

### Detailed Description of Embodiment(s)

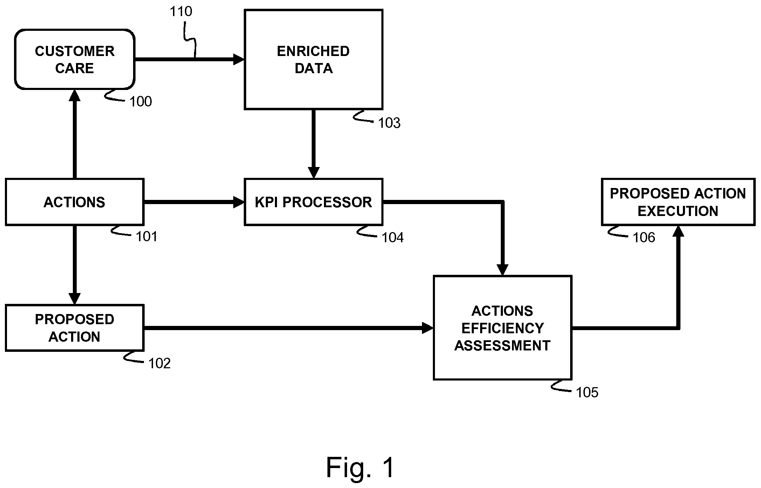

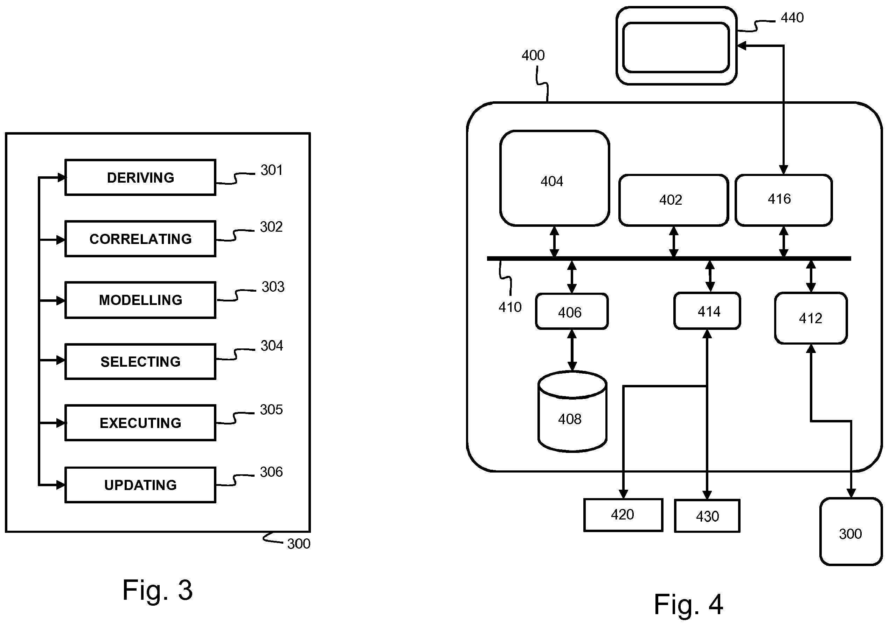

In Fig. 1 an example embodiment of a sequence of steps to assess a proposed action is illustrated and Fig. 3 illustrates an apparatus comprising means configured to analyse diagnostic data.

Enriched data 103 is obtained 110 from customer care 100 and comprises, for example, user's feedback. In an offline mode a model is learned from the enriched data 103 which is collected and processed by customer care 100, and from executed actions 101. The model may, for example, be learned from underlying key performance indicators, KPIs, from historical data. In an online mode, every new proposed recommendation or action 102 is assessed 105 by a developed model through corresponding KPIs 104. Furthermore, each action 101 is interpreted by customer care 100. The proposed action 102 may then be executed 305, 106, or altered, updated or stored.

Thus, the apparatus 300 comprises means to derive 301 from diagnostic data comprising executed actions 101 and user's feedback as enriched data 103 an effectiveness rating for a corresponding action, wherein an action changes a state of a communication network, such as, for example, a Wi-Fi network.

Next, the apparatus 300 comprises further means to correlate 302 KPIs 104 to the actions 101, such that for the actions 101 a respective set of correlated KPIs is obtained. The means of the apparatus 300 are further configured to model 303 a pattern the set of KPIs into effective and non-effective KPIs patterns based on the derived 301 effectiveness rating. Subsequently, the means select 304 for a proposed action 102 an effectiveness rating and a set of correlated KPIs based on the executed actions 101. Differently formulated, the proposed action 102 is assessed 105 on its efficiency. Finally, the proposed action 102 is executed 305, 106 when the assessment indicates that the proposed action 102 will be efficient. Finally, when the proposed action 102 is executed 305, 106, the actions 101 and subsequently the enriched data 103 may be updated 306.

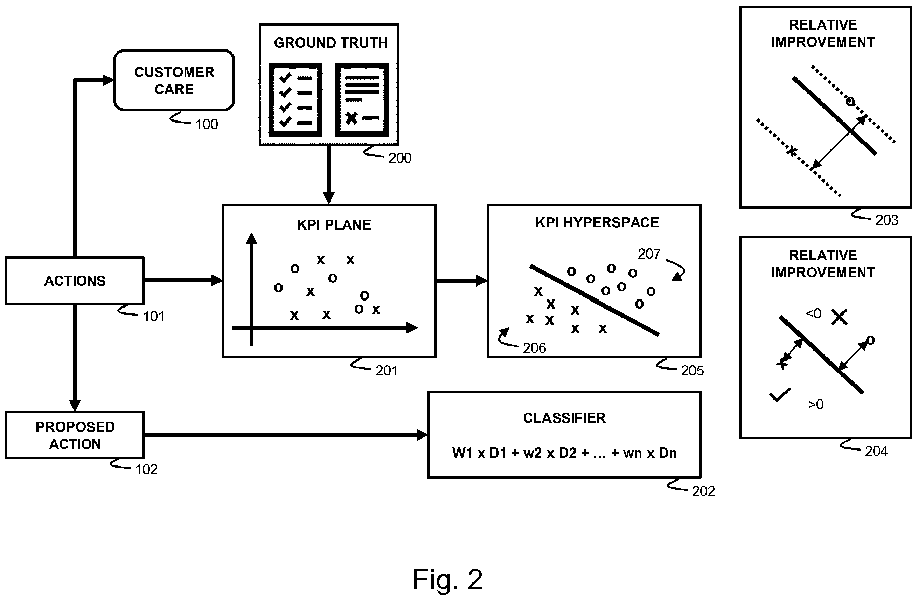

Fig. 2 shows another example embodiment of a sequence of steps to classify modelling actions 101 based on key performance indicators. In a first step data is processed to enrich the executed actions 101. It involves labelling the actions 101 that have previously been proposed by customer care 100 and executed with respect to their efficiency. In other words, customer care 100 collects a user's satisfaction feedback after that an action 101 has been executed to infer whether the action 101 was effective in solving a problem or not resulting in ground truth data 200. In this step, ground truth data 200 may take the form of binary data, that is if the action 101 was effective or not. The collected data is thus genuine user experience. Furthermore, enriched data entails executed actions 101 with corresponding identifiers, such as, for example, date, type of action, account id, and effectiveness rating.

In a next step, namely KPI correlation 302, a correlation between underlying KPIs 201 and corresponding action effectiveness ratings is made. This means that, for a given communication network, underlying KPIs that trigger an action are pulled from the diagnostic data 103 or ground truth data 200 and correlated 302 to a corresponding effectiveness rating. The resulting set of KPIs are dependent on action type and comprises parameters such as downstream, upstream, signal strength, error rate, retransmission rate, dropped packet rate, failed packet rate, reconnection time, number of steering events, channel utilization, neighbouring interference, channel used etc. These parameters may be collected in time series corresponding to, for example, the last twenty-four hours, or collected as a vector of aggregated KPI values, such as cumulative, average, max, min, etc. In both cases, underlying KPIs define a KPI hyper space 205. Additionally, the set of KPIs may originate from multiple communication networks, such as a Wi-Fi network, a powerline network and/or an ethernet network.

Subsequently, in a third step, a model is learned that splits the underlying KPI hyperspace 205 according to a corresponding action effectiveness rating. The outcome of the learned model is a discriminative hyperplane that splits the KPI hyperspace 205 into two subspaces 206 and 207. The model may be learned and the KPI hyperspace 205 may be learned respectively classified by a classifier 202 using machine learning methods, such as a support vector machine and/or a linear regression algorithm.

The steps of learning the model and splitting the hyperspace 205 may be done periodically, meaning that the model itself is updated based on a new batch of ground truth data 200. This way, variations are captured and seasonal changes in customer experience. Furthermore, the model may be learned per action type, and consequently multiple models may be learned.

Thereafter, for a new proposed action 102, thus one that is not yet executed, a prospective improvement reflected through the effectiveness rating is determined. Firstly, a prospective set of underlying KPIs that triggers the proposed action 102 is selected 304 and forwarded to a corresponding learned model. Subsequently, the model output results in two levels of granularity, namely on the one hand a recommendation outcome indicative on which side of the discriminative hyperplane the new point resides 203, and on the other hand an indication of a relative improvement expected by the proposed action 204. A recommendation outcome thus represents a recommendation effectiveness, that is whether the proposed action 102 will be effective or not and may take a binary form. Next to it, a relative improvement is given which measures to which extent the proposed action will improve a customer's experience. Differently formulated, it indicates how effective a proposed action 102 will be.

Finally, a proposed action 102 will be interpreted based on the outcome of the previous step. In other words, the proposed action 105 is assessed 105 on whether to proceed and execute 305, 106 the proposed action 102 or not. Furthermore, in the occurrence of multiple concurrent proposed actions, a decision is made as which one to be executed.

In the occurrence that the predicted effectiveness rating is positive, and the predicted improvement exceeds a predefined threshold, customer care 100 may proceed and execute 305, 106 the proposed action 102. In the occurrence that the predicted effectiveness rating is positive, but the predicted improvement in not significant compared to costs associated to an execution 305, 106, the proposed action 102 is not executed but the diagnosis algorithm is further updated 306. In the occurrence that the predicted effectiveness rating is not positive, the proposed action 102 is tagged as false positive. All false positive proposed actions are further analysed to improve the diagnosis algorithm that proposed these proposed actions.

Finally, if there are concurrent proposed actions 102, their corresponding effectiveness rating is derived and the one causing the maximum improvement is executed 305, 106.

Fig. 4 shows a suitable computing system 400 enabling to implement embodiments of the method for assessing an efficiency of a proposed action according to the invention. Computing system 400 may in general be formed as a suitable general-purpose computer and comprise a bus 410, a processor 402, a local memory 404, one or more optional input interfaces 414, one or more optional output interfaces 416, a communication interface 412, a storage element interface 406, and one or more storage elements 408. Bus 410 may comprise one or more conductors that permit communication among the components of the computing system 400. Processor 402 may include any type of conventional processor or microprocessor that interprets and executes programming instructions. Local memory 404 may include a random-access memory (RAM) or another type of dynamic storage device that stores information and instructions for execution by processor 402 and/or a read only memory (ROM) or another type of static storage device that stores static information and instructions for use by processor 402. Input interface 414 may comprise one or more conventional mechanisms that permit an operator or user to input information to the computing device 400, such as a keyboard 420, a mouse 430, a pen, voice recognition and/or biometric mechanisms, a camera, etc. Output interface 416 may comprise one or more conventional mechanisms that output information to the operator or user, such as a display 440, etc. Communication interface 412 may comprise any transceiver-like mechanism such as for example one or more Ethernet interfaces that enables computing system 500 to communicate with other devices and/or systems, for example with apparatus 300. The communication interface 412 of computing system 400 may be connected to such another computing system by means of a local area network (LAN) or a wide area network (WAN) such as for example the internet. Storage element interface 406 may comprise a storage interface such as for example a Serial Advanced Technology Attachment (SATA) interface or a Small Computer System Interface (SCSI) for connecting bus 410 to one or more storage elements 408, such as one or more local disks, for example SATA disk drives, and control the reading and writing of data to and/or from these storage elements 408. Although the storage element(s) 408 above is/are described as a local disk, in general any other suitable computer-readable media such as a removable magnetic disk, optical storage media such as a CD or DVD, -ROM disk, solid state drives, flash memory cards, ... could be used. Computing system 400 could thus correspond to the apparatus 300 in the embodiment illustrated by Fig. 3.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An apparatus (300) comprising means for performing:
- deriving (301) for a respective action from diagnostic data comprising executed actions (101) and user's experiences (200), wherein an action changes a state of a communication network, an effectiveness rating based on the user's experiences.

2. The apparatus (300) according to claim 1, wherein the diagnostic data further comprises key performance indicators, KPIs (201), wherein an action is triggerable by one or more KPIs; and wherein the means are further configured to perform:
- correlating (302) the KPIs to the actions thereby obtaining a set of correlated KPIs for the action.

3. The apparatus (300) according to claim 2, wherein the means are further configured to perform:
- modelling (303) a pattern of the set of correlated KPIs into an effective and a non-effective KPIs pattern based on the effectiveness rating.

4. The apparatus (300) according to claim 3, wherein the means are further configured to perform:
- selecting (304) for a proposed action an effectiveness rating and a set of correlated KPIs based on the executed actions; and
- executing (305) the proposed action when the effectiveness rating of the set exceeds a predefined threshold respectively the effective KPIs pattern results in an effective action.

5. The apparatus (300) according to claim 4, wherein the means are further configured to perform:
- updating (306) the diagnostic data when the proposed action is executed.

6. The apparatus (300) according to any one of the claims 3 to 5, wherein the modelling (303) is performed by a machine learning method (202).

7. The apparatus (300) according to claim 6, wherein the machine learning method is a support vector machine.

8. The apparatus (300) according to claim 6, wherein the machine learning method is a logistic regression algorithm.

9. The apparatus (300) according to any one of the preceding claims, wherein the communication network is one of the group of a wireless network, a power line network, and an ethernet network.

10. A method comprising the step of:
- deriving (301) from diagnostic data comprising executed actions (101) and user's experiences (200), wherein an action changes a state of a communication network, for a respective action an effectiveness rating based on the user's experiences.

11. A computer program product comprising computer-executable instructions for performing the following step when the program is run on a computer:
- deriving from diagnostic data comprising executed actions and user's experiences, wherein an action changes a state of a communication network, for a respective action an effectiveness rating based on the user's experiences.

12. A computer readable storage medium comprising commuter-executable instructions for performing the following step when the program is run on a computer:
- deriving from diagnostic data comprising executed actions and user's experiences, wherein an action changes a state of a communication network, for a respective action an effectiveness rating based on the user's experiences.
